# EUROPEAN PATENT APPLICATION

(11) **EP 4 462 528 A1**
(43) Date of publication of application: **13.11.2024**
(21) Application number: 22923682.3
(22) Date of filing: 30.12.2022
(51) Int. Cl.: H01M 10/04, H01M 10/0587

(54) **WINDING DEVICE AND WINDING METHOD**

(30) Priority: 28.01.2022 CN 202210109403
(71) Applicant: Contemporary Amperex Technology Co., Limited, Fujian 352100 (CN)
(72) Inventor: GUO, Suogang, Ningde City, Fujian 352100 (CN); YE, Yonghuang, Ningde City, Fujian 352100 (CN); YANG, Guozhong, Ningde City, Fujian 352100 (CN); FU, Chenghua, Ningde City, Fujian 352100 (CN); ZHANG, Chenchen, Ningde City, Fujian 352100 (CN)
(74) Representative: Gong, Jinping
(86) International application number: PCT/CN2022/144243
(87) International publication number: WO 2023/142897

(57) **Abstract**

This application relates to a winding device and a winding method, and pertains to the field of battery manufacturing technology. This application proposes a winding device including: a winding component; and a drawing mechanism, where the drawing mechanism is configured to draw a protruding section of a separator after the separator is led out of the winding component, so that length of the protruding section reaches a preset value. The winding component is configured to start winding after the length of the protruding section reaches the preset value, to form an electrode assembly. This application further proposes a winding method for forming an electrode assembly through winding. The winding device and the winding method are used for forming an electrode assembly with high safety performance through winding, so as to implement industrial production of the electrode assembly and improve manufacturing efficiency of the electrode assembly.

## Description

### CROSS-REFERENCE TO RELATED APPLICATIONS

This application claims priority to Chinese Patent Application (No. 202210109403.4) filed on January 28, 2022 and entitled "WINDING DEVICE AND WINDING METHOD", which is incorporated herein by reference in its entirety.

### TECHNICAL FIELD

This application relates to the field of battery manufacturing technology, and specifically to a winding device and a winding method.

### BACKGROUND

With the rapid development of the new energy vehicle industry, the technical levels of traction batteries have become increasingly mature, and the safety performance of traction batteries has become an important indicator for evaluating their performance. The winding electrode assembly is an important component inside a battery cell, and the safety performance of the electrode assembly plays a decisive role in the safety performance of the battery cell. However, even if the structure of the electrode assembly is improved to enhance the safety performance of the battery cell, there is currently no corresponding winding device, which leads to the inability to implement industrial production even with improvements made to the structure of the electrode assembly.

### SUMMARY

Therefore, this application proposes a winding device and a winding method for forming an electrode assembly with high safety performance through winding, so as to implement industrial production of the electrode assembly and improve manufacturing efficiency of the electrode assembly.

Some embodiments of this application propose a winding device configured to form an electrode assembly through winding. The winding device includes: a winding component; and a drawing mechanism, where the drawing mechanism is configured to draw a protruding section of a separator after the separator is led out of the winding component, so that length of the protruding section reaches a preset value; where the winding component is configured to start winding after the length of the protruding section reaches the preset value, to form the electrode assembly.

The winding device according to these embodiments of this application includes the drawing mechanism, and the drawing mechanism can draw the protruding section of the separator to move, so that the length of the protruding section reaches the preset value. The protruding section of the separator is also wound onto the winding component, allowing the protruding section of the separator to be stacked with a new separator entering the winding component, so that the separator between the negative electrode plate and the positive electrode plate at the inner ring has a plurality of layers. In this way, when lithium precipitation occurs, lithium dendrites are less likely to pierce the separator to cause contact between the negative electrode plate and the positive electrode plate and in turn cause short circuits inside the electrode assembly. The electrode assembly formed by the winding device through winding has high safety performance, and the winding device can implement industrial production of the electrode assembly and improve manufacturing efficiency of the electrode assembly.

According to some embodiments of this application, the drawing mechanism includes a drawing member and a driving member, the driving member is configured to drive the drawing member to move between a first position and a second position, and the drawing member is configured to draw the protruding section in a process of moving from the first position to the second position.

In the foregoing solution, driven by the driving member, the drawing member draws the protruding section of the separator in the process of moving from the first position to the second position, so as to automatically draw the protruding section of the separator to reach the preset value.

According to some embodiments of this application, the drawing member is configured to return from the second position to the first position after the winding component starts winding, and to provide a tension force to the separator in the process of returning to the first position.

In the foregoing solution, after the winding component starts winding, the drawing member tensions the separator in the process of returning from the second position to the first position, causing the protruding section of the separator to be tightly wound onto the winding component without any wrinkles, which improves winding quality of the separator and allows the electrode assembly to have good safety performance.

According to some embodiments of this application, the drawing member is configured to return from the second position to the first position after the winding component starts winding, and to release the separator when returning to the first position.

In the foregoing solution, the drawing member releases the separator when returning from the second position to the first position, and the winding component continues winding to wind the remaining portion of the protruding section of the separator onto the winding component, to form the electrode assembly.

According to some embodiments of this application, when the drawing member is at the first position, the drawing member is located below the winding component in the direction of gravity.

In the foregoing solution, the drawing member is located below the winding component when at the first position. After the drawing member returns to the first position and releases the separator, the remaining portion of the protruding section of the separator naturally hangs down in the direction of gravity, such that the remaining portion of the protruding section of the separator is flat and wrinkle-free in the process of entering the winding component, which improves the winding quality of the separator and allows the electrode assembly to have good safety performance.

According to some embodiments of this application, a movement direction of the drawing member intersects with the direction of gravity.

In the foregoing solution, the drawing member moves along the direction intersecting with the direction of gravity, such that the movement path of the drawing member between the first position and the second position can intersect with the direction of gravity, reducing the space occupied by the drawing member in the direction of gravity during the movement and providing a long stroke range.

According to some embodiments of this application, the drawing member includes a pair of first clamping portions, the pair of first clamping portions being configured to clamp an end portion of the separator.

In the foregoing solution, with the pair of clamping portions clamping the end portion of the separator, the protruding section of the separator can be reliably drawn to move, and thus the protruding section of the separator can be reliably pulled out to the preset length.

According to some embodiments of this application, the winding device further includes a fixing member configured to fix an end portion of the separator, the fixing member being configured to release the end portion of the separator when the drawing member returns to the first position; where the drawing member is configured to push a portion of the separator located between the fixing member and the winding component.

In the foregoing solution, the fixing member fixes the end portion of the separator, and the drawing member pushes the portion of the separator located between the fixing member and the winding component, and pulls out the protruding section of the separator to the preset length, which can reduce the stroke length of the drawing member when moving between the first position and the second position, and reduce the space occupied by the drawing member during the movement. The fixing member releases the end portion of the separator when the drawing member returns to the first position, and the winding component continues winding to wind the remaining portion of the protruding section of the separator onto the winding component, to form the electrode assembly.

According to some embodiments of this application, the fixing member includes a pair of second clamping portions, the pair of second clamping portions being configured to clamp the end portion of the separator.

In the foregoing solution, with the pair of second clamping portions clamping the end portion of the separator, the end portion of the separator can be reliably fixed, and the drawing member can reliably pull out the protruding section of the separator to the preset length.

According to some embodiments of this application, the drawing member is a movable pulley.

In the foregoing solution, the drawing member is set as a movable pulley, such that in the process of the drawing member pushing the separator to move, a contact angle of the drawing member relative to the surface of the separator can be automatically adjusted by rotating around the axis of the drawing member, avoiding scratching the separator.

According to some embodiments of this application, the winding device further includes a fixed pulley disposed between the winding component and the drawing member and configured to guide the separator to move.

In the foregoing solution, disposing the fixed pulley between the winding component and the drawing member can guide the change in the movement direction of the separator, reduce the influence of the rotation of the winding component on the protruding section, and facilitate the control of the movement direction of a portion of the protruding section from the fixed pulley to the end portion of the separator, which is not only conducive to calculating the length of the protruding section, but also can improve the operational reliability of the winding device.

Some embodiments of this application further propose a winding method for forming an electrode assembly through winding. The winding method includes:
leading a separator through a winding component, where a portion of the separator led out of the winding component is a protruding section;
drawing the protruding section of the separator, so that length of the protruding section reaches a preset value; and
starting, by the winding component, winding to form the electrode assembly.

In the electrode assembly formed through winding by using the winding method according to these embodiments of this application, the protruding section of the separator with a length of the preset value can also be wound onto the winding component, allowing the protruding section of the separator to be stacked with the new separator entering the winding component, so that the separator between the negative electrode plate and the positive electrode plate at the inner ring has a plurality of layers. In this way, when lithium precipitation occurs, lithium dendrites are less likely to pierce the separator to cause contact between the negative electrode plate and the positive electrode plate and in turn cause short circuits inside the electrode assembly. The electrode assembly formed through winding by using such winding method has high safety performance.

According to some embodiments of this application, the preset value is greater than a perimeter of the winding component.

In the foregoing solution, the preset value of the protruding section is greater than the perimeter of the winding component, such that a plurality of layers of separators can be disposed at least between the first bent region at the innermost ring of the positive electrode plate and the negative electrode plate on the inner side of the positive electrode plate, thereby preventing lithium dendrites from piercing the separator when lithium precipitation occurs on the inner side of the first bent region at the innermost ring of the positive electrode plate, significantly improving the safety performance of the electrode assembly.

For additional aspects and advantages of this application, some will be given in the following description, and some will become apparent in the following description or will be understood in the practice of this application.

### BRIEF DESCRIPTION OF DRAWINGS

To describe the technical solutions in the embodiments of this application more clearly, the following briefly describes the accompanying drawings required for describing the embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic structural diagram of a winding device according to some embodiments of this application;
FIG. 2 is a cross-sectional view of an electrode assembly formed by a winding device through winding according to some embodiments of this application;
FIG. 3 is a schematic diagram of a state in which a drawing member of a drawing mechanism in a winding device is at a first position according to some embodiments of this application;
FIG. 4 is a schematic diagram of a state in which a drawing member of a drawing mechanism in a winding device is at a second position according to some embodiments of this application;
FIG. 5 is a schematic diagram of a state in which a winding component in a winding device winds to drive a drawing member to move to a first position according to some embodiments of this application;
FIG. 6 is a schematic diagram of a state in which a drawing member of a drawing mechanism in a winding device releases a separator after returning to a first position according to some embodiments of this application;
FIG. 7 is a schematic structural diagram of another drawing member of a drawing mechanism in a winding device according to some embodiments of this application;
FIG. 8 is a schematic structural diagram of the winding device in FIG. 3 further provided with a fixed pulley (no driving member is shown);
FIG. 9 is a schematic structural diagram of the winding device in FIG. 7 further provided with a fixed pulley;
FIG. 10 is a process flowchart of a winding method according to some embodiments of this application;
FIG. 11 is a schematic diagram of a winding process of the winding device in FIG. 3; and
FIG. 12 is a schematic diagram of a winding process of the winding device in FIG. 7.

The accompanying drawings are not drawn to scale.

Reference signs: 100. winding device; 110. winding component; 111. winding needle; 112. gap; 1121. first end; 1122. second end; 113. separator clamping portion; 114. feeding side; 115. pulling-out side; 120. drawing mechanism; 121. drawing member; 1211. first clamping portion; 122. driving member; 130. fixing member; 131. second clamping portion; 140. fixed pulley; 200. electrode assembly; 210. negative electrode plate; 220. positive electrode plate; 230. separator; 231. protruding section; 2311. starting end; 232. end portion; 233. first separator; 234. second separator; and 235. bent region.

### DESCRIPTION OF EMBODIMENTS

To make the objectives, technical solutions, and advantages in the embodiments of this application clearer, the following clearly and completely describes the technical solutions in the embodiments of this application with reference to the accompanying drawings in the embodiments of this application. Apparently, the described embodiments are some but not all of the embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by persons skilled in the art to which this application belongs. The terms used in the specification of this application are intended to merely describe the specific embodiments rather than to limit this application. The terms "include", "have", and any variations thereof in the specification, claims, and brief description of drawings of this application are intended to cover non-exclusive inclusions. In the specification, claims, or accompanying drawings of this application, the terms "first", "second", and the like are intended to distinguish between different objects rather than to describe a particular order or a primary-secondary relationship.

In this application, reference to "embodiment" means that specific features, structures, or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described in this application may be combined with other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection; and a direct connection, an indirect connection via an intermediate medium, or an internal communication between two elements. Persons of ordinary skill in the art can understand specific meanings of these terms in this application as appropriate to specific situations.

In this application, "a plurality of" means more than two (inclusive).

An electrode assembly mentioned in the embodiments of this application is an important component of a battery cell in a lithium-ion battery. The electrode assembly is formed by stacking and winding a positive electrode plate, a negative electrode plate, and a separator, and the separator is disposed between the positive electrode plate and the negative electrode plate to insulate the positive electrode plate from the negative electrode plate. Working of the battery cell mainly relies on migration of metal ions between the positive electrode plate and the negative electrode plate. The positive electrode plate includes a positive electrode current collector and a positive electrode active substance layer, and the positive electrode active substance layer is applied onto a surface of the positive electrode current collector. The negative electrode plate includes a negative electrode current collector and a negative electrode active substance layer, and the negative electrode active substance layer is applied onto a surface of the negative electrode current collector.

In the related art, after the electrode assembly is formed through winding, the positive electrode plate and the negative electrode plate in a bent region at the few innermost rings of the electrode assembly have an area difference within the same angle range, which easily causes lithium precipitation. In this case, lithium dendrites are prone to pierce the separator, causing the positive electrode plate and the negative electrode plate to be short-circuited, and thus leading to short circuits inside the electrode assembly. At present, an improvement idea for the electrode assembly proposes disposing several layers of separators between the positive electrode plate and the negative electrode plate at the few innermost rings of the electrode assembly, so that even if lithium precipitation occurs, lithium dendrites are less likely to pierce the separator, thereby overcoming the foregoing defects and allowing the electrode assembly to have good safety performance even when lithium precipitation occurs at the few innermost rings. However, there is currently no corresponding winding device and winding method available for industrial production of such electrode assembly.

Through research, the inventors have found that the winding process for most electrode assemblies involves first using a pair of winding needles of a winding component to clamp a separator, winding it a few turns, and then sequentially winding a negative electrode plate and a positive electrode plate. If an end portion of the separator can be led out of the winding component to form a protruding section, and the protruding section is also wound onto the winding component, it can be achieved that when the winding component rotates one turn, a new separator is pulled in from a feeding side of the separator and the protruding section can also simultaneously be wound onto the winding component. This allows for industrial production of the electrode assembly without the need for an additional separator feeding mechanism, reducing improvement degree and improvement costs of the existing winding devices.

Based on the foregoing ideas, the inventors of this application have proposed a technical solution, in which a drawing mechanism is further disposed on a pulling-out side of the winding component. First, the drawing mechanism draws the protruding section of the separator to a preset value, and then the winding component starts winding, so as to form the electrode assembly with high safety performance. This not only can implement industrial production of the electrode assembly but also can improve manufacturing efficiency of the electrode assembly.

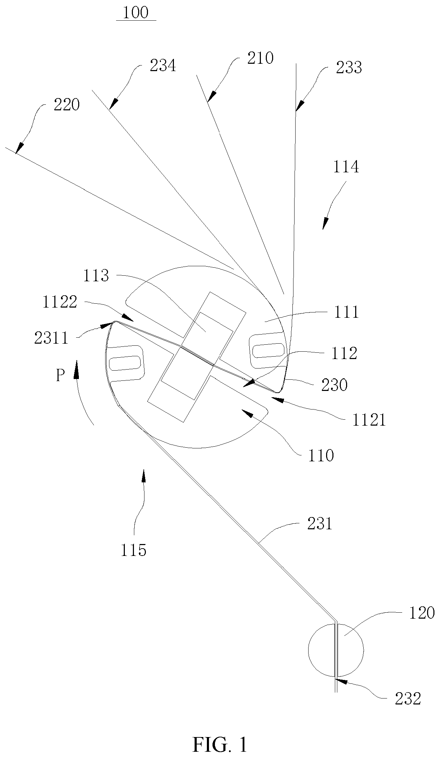

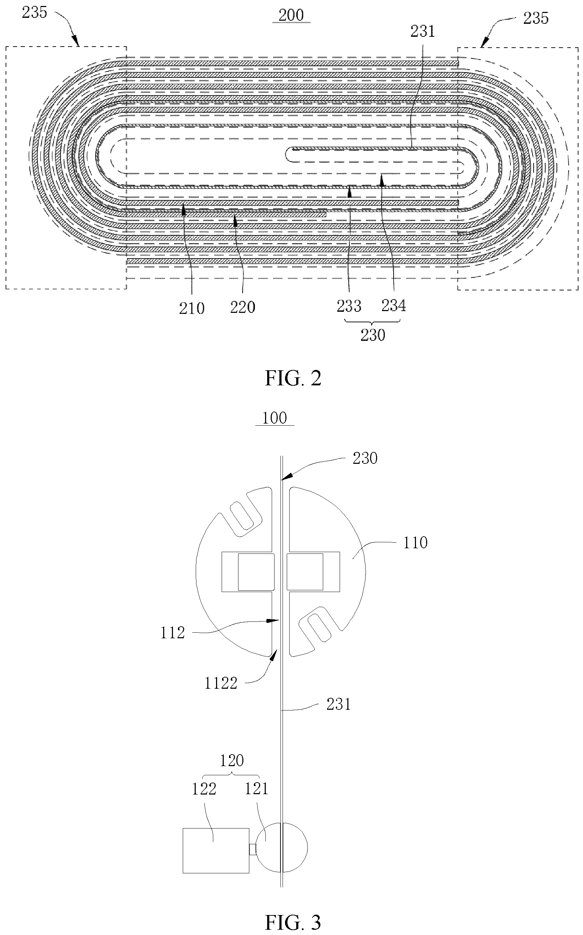

FIG. 1 is a schematic structural diagram of a winding device according to some embodiments of this application; and FIG. 2 is a cross-sectional view of an electrode assembly formed by a winding device through winding according to some embodiments of this application.

As shown in FIG. 1 and FIG. 2, some embodiments of this application propose a winding device 100 configured to form an electrode assembly 200 through winding. The winding device 100 includes a winding component 110 and four feeding mechanisms (not shown in the figure).

A battery cell to which the electrode assembly 200 according to these embodiments of this application is applicable may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. However, for the brevity of description, in the following embodiments, a winding process of an electrode assembly in a lithium-ion battery is used as an example for description.

As shown in FIG. 1 and FIG. 2, the electrode assembly 200 includes a negative electrode plate 210, a positive electrode plate 220, a first separator 233, and a second separator 234 that are stacked and wound, where the first separator 233 and the second separator 234 are wound before the negative electrode plate 210 and the positive electrode plate 220. For the stacked first separator 233 and second separator 234 wound onto the winding component 110 by one turn, the second separator 234 is located on an inner side of the first separator 233 (that is, a side close to a winding axis). After the first separator 233 and the second separator 234 are wound at least one turn, the negative electrode plate 210 enters between the first separator 233 and the second separator 234 to be wound onto the winding component 110. After the negative electrode plate 210 is wound one turn, the positive electrode plate 220 enters a side of the second separator 234 far away from the negative electrode plate 210 to be wound onto the winding component 110.

It can be understood that one turn in this application refers to one circle from a point of the electrode assembly 200 as a starting point to another point along a winding direction, where a connecting line between the another point and the starting point extends along a radial direction of the electrode assembly. A half turn in this application refers to half of one turn, and persons skilled in the art should understand meanings of other turns, which are not further described herein.

As shown in FIG. 1, the winding component 110 is configured to form the electrode assembly 200 through winding, and four feeding mechanisms (not shown in the figure) are disposed on a feeding side 114 of the winding component 110, where the four feeding mechanisms are configured to supply the negative electrode plate 210, the positive electrode plate 220, the first separator 233, and the second separator 234 to the winding component 110 respectively.

As shown in FIG. 1, the winding component 110 includes a pair of winding needles 111, where each winding needle 111 is semi-cylindrical or semi-elliptical. The pair of winding needles 111 are joined together to form the winding component 110 with a cylindrical or elliptical outer peripheral surface, and the pair of winding needles 111 rotate together to wind the negative electrode plate 210, the positive electrode plate 220, the first separator 233, and the second separator 234 onto the outer peripheral surface of the winding component 110. For ease of description, the first separator 233 and the second separator 234 are collectively referred to as a separator 230.

There is a gap 112 between the pair of winding needles 111 to lead the separator 230 through, and a pair of separator clamping portions 113 are provided on sides of the pair of winding needles 111 forming the gap 112. After the separator 230 is led through the gap 112, the pair of separator clamping portions jointly clamp the separator 230, and then the winding component 110 starts forming the electrode assembly 200 through winding. A rotation direction of the winding component 110 is a first direction P.

As shown in FIG. 1, some embodiments of this application propose a winding device 100 configured to form an electrode assembly 200 through winding. The winding device 100 includes a winding component 110 and a drawing mechanism 120, where the drawing mechanism 120 is configured to draw a protruding section 231 of a separator 230 after the separator 230 is led out of the winding component 110, so that length of the protruding section 231 reaches a preset value. The winding component 110 is configured to start winding after the length of the protruding section 231 reaches the preset value, to form the electrode assembly 200.

An end of the gap 112 corresponding to the feeding side 114 of the winding component 110 is a first end 1121, and the other end of the gap 112 is a second end 1122. The separator 230 enters the gap 112 from the first end 1121 and is led through the gap 112 from the second end 1122. It can be understood that during rotation of the winding component 110, orientations of the first end 1121 and second end 1122 of the gap 112 are continuously changing. As shown in FIG. 1, in some embodiments of this application, the gap 112 is linear, and the first end 1121 and the second end 1122 are located on two opposite sides of the winding component 110 in a radial direction respectively. In other embodiments, the gap 112 may alternatively be folded, and the first end 1121 and the second end 1122 form included angles of 90°, 150°, or the like around a circumference of the winding component 110.

The protruding section 231 of the separator 230 refers to a portion of the separator 230 led out of the winding component 110, that is, a portion between an end portion 232 of the separator 230 and the second end 1122 of the gap 112. A position at which the separator 230 is led through the second end 1122 of the gap 112 is a starting end 2311 of the protruding section 231, and the end portion 232 of the separator 230 is a tail end of the protruding section 231. The drawing mechanism 120 may draw the separator 230 to move by acting on the tail end of the protruding section 231 (that is, the end portion 232 of the separator 230) or by acting on a middle portion of the protruding section 231 (that is, a portion between the starting end 2311 and tail end of the protruding section 231). The drawing mechanism 120 may draw the protruding section 231 to move automatically or through manual driving.

The winding component 110 further includes a pulling-out side 115 corresponding to the feeding side 114. The drawing mechanism 120 is disposed on the pulling-out side 115 of the winding component 110, and is configured to draw the protruding section 231 of the separator 230 to move to pull the separator 230 out of the second end 1122 of the gap 112. As shown in FIG. 1, in some embodiments of this application, the feeding side 114 and pulling-out side 115 of the winding component 110 may be located on two opposite sides in the radial direction of the winding component 110 respectively, so as to reasonably arrange the feeding mechanisms and the drawing mechanism 120. In other embodiments, the feeding side 114 and pulling-out side 115 of the winding component 110 may alternatively be disposed at certain angles around the circumference of the winding component 110 separately.

The winding device 100 according to these embodiments of this application includes the drawing mechanism 120, and the drawing mechanism 120 can draw the protruding section 231 of the separator 230 to move, so that the length of the protruding section 231 reaches the preset value. The protruding section 231 of the separator 230 is also wound onto the winding component 110, allowing the protruding section 231 of the separator 230 to be stacked with the new separator 230 entering the winding component 110, so that the separator 230 between the negative electrode plate 210 and the positive electrode plate 220 at the inner ring has a plurality of layers. In this way, when lithium precipitation occurs, lithium dendrites are less likely to pierce the separator to cause contact between the negative electrode plate 210 and the positive electrode plate 220 and in turn cause short circuits inside the electrode assembly 200. The electrode assembly 200 formed by the winding device 100 through winding has high safety performance, and the winding device 100 can implement industrial production of the electrode assembly 200 and improve manufacturing efficiency of the electrode assembly 200.

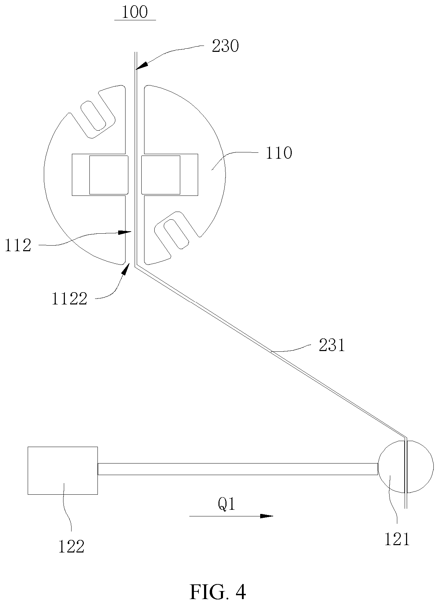

FIG. 3 is a schematic diagram of a state in which a drawing member of a drawing mechanism in a winding device is at a first position according to some embodiments of this application; and FIG. 4 is a schematic diagram of a state in which a drawing member of a drawing mechanism in a winding device is at a second position according to some embodiments of this application.

As shown in FIG. 3 and FIG. 4, in some embodiments of this application, the drawing mechanism 120 includes a drawing member 121 and a driving member 122, the driving member 122 is configured to drive the drawing member 121 to move between a first position and a second position, and the drawing member 121 is configured to draw the protruding section 231 in a process of moving from the first position to the second position.

A movement path of the drawing member 121 between the first position and the second position may be straight or curved. As shown in FIG. 4, in some embodiments of this application, the drawing member 121 moves from the first position to the second position along a first sub-direction Q1 of a second direction, where the movement path of the drawing member 121 is straight.

The drawing member 121 may act on the protruding section 231 of the separator 230 by clamping or vacuum adsorption, or pull out the protruding section 231 of the separator 230 by pushing a middle portion of the separator 230.

The first position is a position where the drawing member 121 starts acting on the protruding section 231 of the separator 230, and the second position is a position where the drawing member 121 draws the protruding section 231 of the separator 230 to move so that the length of the protruding section 231 is the preset value. The drawing member 121 moves from the first position to the second position to pull the separator 230 out of the second end 1122 of the gap 112, causing the length of the protruding section 231 to continuously increase until the length of the protruding section 231 reaches the preset value.

The first position corresponds to the position of the second end 1122 of the gap 112 before the winding component 110 starts winding, so that the drawing member 121 can act on the separator 230 at the first position. The second position may be located on a side of the first position in the horizontal direction, below the first position in the direction of gravity G, or on a side of the first position in another direction.

The drawing member 121 is mounted on an execution end of the driving member 122, and the driving member 122 drives the drawing member 121 to move between the first position and the second position. Based on the foregoing embodiment in which the movement path of the drawing member 121 is straight, the driving member 122 may be a common linear driving mechanism such as a linear cylinder or an electric push rod. Based on the foregoing embodiment in which the movement path of the drawing member 121 is curved, the driving member 122 may alternatively be a rotating driving mechanism, such as a powered rotating disc, to drive the drawing member 121 to move around a circumference of the driving member 122.

The drawing mechanism 120 may further include a guide rail assembly, and the drawing member 121 is slidably mounted on the guide rail assembly. The guide rail assembly is used to guide the drawing member 121 to move between the first position and the second position.

In the foregoing solution, driven by the driving member 122, the drawing member 121 draws the protruding section 231 of the separator 230 in the process of moving from the first position to the second position, so as to automatically draw the protruding section 231 of the separator 230 to reach the preset value.

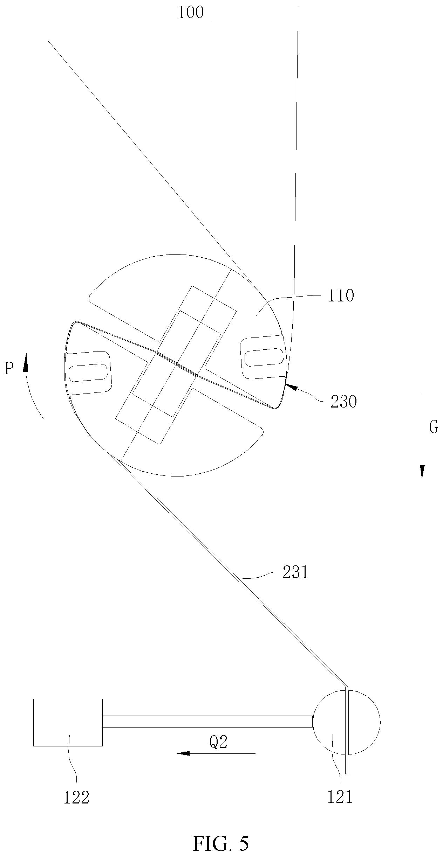

FIG. 5 is a schematic diagram of a state in which a winding component in a winding device winds to drive a drawing member to move to a first position according to some embodiments of this application.

As shown in FIG. 5, in some embodiments of this application, the drawing member 121 is configured to return from the second position to the first position after the winding component 110 starts winding, and to provide a tension force to the separator 230 in the process of returning to the first position.

The movement path of the drawing member 121 from the first position to the second position and the movement path of the drawing member 121 from the second position to the first position may be the same or different. In some embodiments of this application, the drawing member 121 returns from the second position to the first position along the original movement path from the first position to the second position, that is, moving from the second position to the first position along a second sub-direction Q2 of the second direction.

When the drawing member 121 draws the protruding section 231 of the separator 230 to move to the second position, the winding component 110 rotates along the first direction P, and the protruding section 231 is wound onto the winding component 110, causing the length of the protruding section 231 to decrease until the entire protruding section 231 is wound onto the winding component 110. In the process of the drawing member 121 moving from the second position to the first position along the second sub-direction Q2 of the second direction, the drawing member 121 continuously acts on a portion of the protruding section 231 that is not wound onto the winding component 110, so as to tension the portion of the protruding section 231 that is not wound onto the winding component 110.

There are many ways for the drawing member 121 to provide the tension force to the separator 230. The driving member 122 itself may provide the tension force, or another elastic member may be disposed to provide the tension force. For example, based on the embodiment in which the driving member 122 is a linear cylinder, the linear cylinder can be set to an unloaded state, and damping is formed through an air pressure value inside the linear cylinder. For another example, the drawing mechanism 120 may further include a spring, where one end of the spring is fixedly disposed and the other end of the spring abuts against the drawing member 121. In the process of the drawing member 121 moving from the second position to the first position, the other end of the spring applies a force to the drawing member 121 toward the second position.

In the foregoing solution, after the winding component 110 starts winding, the drawing member 121 tensions the separator 230 in the process of returning from the second position to the first position, causing the protruding section 231 of the separator 230 to be tightly wound onto the winding component 110 without any wrinkles, which improves winding quality of the separator 230 and allows the electrode assembly 200 to have good safety performance.

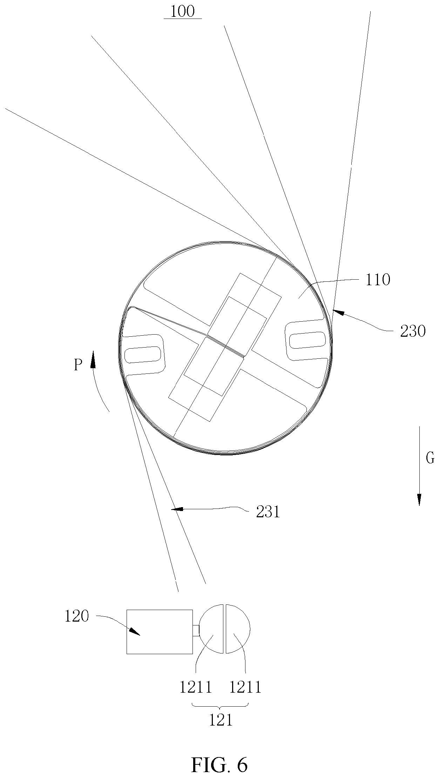

FIG. 6 is a schematic diagram of a state in which a drawing member of a drawing mechanism in a winding device releases a separator after returning to a first position according to some embodiments of this application.

As shown in FIG. 6, in some embodiments of this application, the drawing member 121 is configured to return from the second position to the first position after the winding component 110 starts winding, and to release the separator 230 when returning to the first position.

When the drawing member 121 returns to the first position, the drawing member 121 releases the separator 230, allowing the winding component 110 to continue winding the remaining portion of the protruding section 231.

The first position may be located below the direction of gravity G of the winding component 110 or at another position of the winding component 110, for example, being located obliquely below or on a side in the horizontal direction.

In the foregoing solution, the drawing member 121 releases the separator 230 when returning from the second position to the first position, and the winding component 110 continues winding to wind the remaining portion of the protruding section 231 of the separator 230 onto the winding component 110, to form the electrode assembly 200.

As shown in FIG. 6, in some embodiments of this application, when the drawing member 121 is at the first position, the drawing member 121 is located below the winding component 110 in the direction of gravity G.

When the drawing member 121 is at the first position, the drawing member 121 may be located directly below the winding component 110 in the direction of gravity G or obliquely below the winding component 110 in the direction of gravity G.

In the foregoing solution, the drawing member 121 is located below the winding component 110 when at the first position. After the drawing member 121 returns to the first position and releases the separator 230, the remaining portion of the protruding section 231 of the separator 230 naturally hangs down in the direction of gravity G, such that the remaining portion of the protruding section 231 of the separator 230 is flat and wrinkle-free in the process of entering the winding component 110, which improves the winding quality of the separator 230 and allows the electrode assembly 200 to have good safety performance.

As shown in FIG. 5 and FIG. 6, in some embodiments of this application, a movement direction of the drawing member 121 intersects with the direction of gravity G.

In the process of the drawing member 121 moving between the first position and the second position, the movement path of the drawing member 121 may be in a plurality of directions intersecting with the direction of gravity G. In some embodiments of this application, based on the foregoing embodiment in which the drawing member 121 is located directly below the winding component 110 in the direction of gravity G when at the first position, the second direction is the horizontal direction, the drawing member 121 moves along the horizontal direction, and the movement direction of the drawing member 121 is perpendicular to a direction of the drawing member 121 at the first position relative to the winding component 110, so as to minimize space occupied by the drawing member 121 in the direction of gravity G during the movement. In other embodiments, the movement direction of the drawing member 121 and the direction of the drawing member 121 at the first position relative to the winding component 110 may alternatively be flexibly set.

In the foregoing solution, the drawing member 121 moves along the direction intersecting with the direction of gravity G, such that the movement path of the drawing member 121 between the first position and the second position can intersect with the direction of gravity G, reducing the space occupied by the drawing member 121 in the direction of gravity G during the movement and providing a long stroke range.

As shown in FIG. 6, in some embodiments of this application, the drawing member 121 includes a pair of first clamping portions 1211, the pair of first clamping portions 1211 being configured to clamp an end portion 232 of the separator 230.

The pair of first clamping portions 1211 jointly clamp the separator 230 from two sides of the separator 230 in a thickness direction, and the pair of first clamping portions 1211 may be a pair of pneumatic fingers or electric fingers.

The pair of first clamping portions 1211 pull the protruding section 231 out of the gap 112 of the winding component 110 by clamping the end portion 232 of the separator 230, and a movement stroke of the pair of first clamping portions 1211 is equal to a pulling length of the protruding section 231 based on the first position.

In the foregoing solution, with the pair of clamping portions clamping the end portion 232 of the separator 230, the protruding section 231 of the separator 230 can be reliably drawn to move, and thus the protruding section 231 of the separator 230 can be reliably pulled out to the preset length.

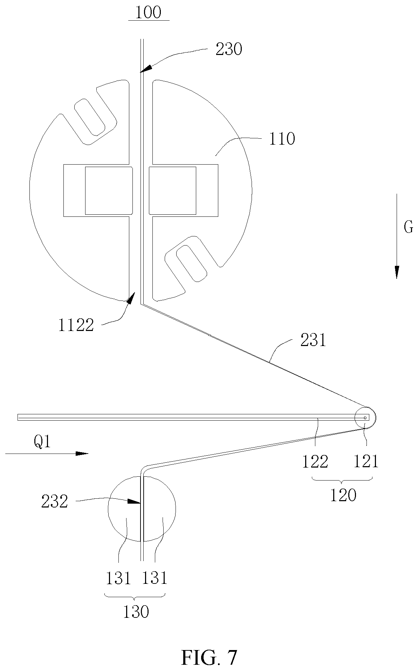

FIG. 7 is a schematic structural diagram of another drawing member of a drawing mechanism in a winding device according to some embodiments of this application.

As shown in FIG. 7, in some embodiments of this application, the winding device 100 further includes a fixing member 130 configured to fix an end portion 232 of the separator 230, the fixing member 130 being configured to release the end portion 232 of the separator 230 when the drawing member 121 returns to the first position; where the drawing member 121 is configured to push a portion of the separator 230 located between the fixing member 130 and the winding component 110.

The fixing member 130 may be disposed below the winding component 110 in the direction of gravity G or in another orientation of the winding component 110. The fixing member 130 may fix the end portion 232 of the separator 230 by clamping or adsorption.

The drawing member 121 may be an elongated push rod extending along a width direction of the separator 230, which acts on the separator 230 through an outer peripheral surface of the push rod; or the drawing member 121 may be a roller, a pulley, or the like that rotates around its own axis in the width direction of the separator 230.

The drawing member 121 is disposed between the fixing member 130 and the winding component 110, and is configured to push a middle portion of the protruding section 231 of the separator 230 (that is, a portion of the protruding section 231 between the second end 1122 of the gap 112 and the end portion 232 of the separator 230).

The drawing member 121 may be directly disposed at a midpoint position between the winding component 110 and the fixing member 130. In the process of the drawing member 121 pushing the separator 230, the action point of the separator 230 has same distances to the winding component 110 and the fixing member 130, and the length of the protruding section 231 is greater than a movement stroke of the drawing member 121. Preferably, when the fixing member 130 is disposed adjacent to the winding component 110, the length of the protruding section 231 is approximately twice the movement stroke of the drawing member 121, which can significantly reduce the movement stroke of the drawing member 121 and reduce the space required by the drawing member 121. In other embodiments, the drawing member 121 may alternatively be located at another position between the winding component 110 and the fixing member 130, for example, located at one-third between the winding component 110 and the fixing member 130.

Further, another intermediate component (for example, the following fixed pulley 140) may be disposed between the drawing member 121 and the winding component 110 to guide the movement of the separator 230. For example, the drawing member 121 is disposed at a midpoint position between the intermediate component and the fixing member 130. In the process of the drawing member 121 pushing the separator 230, the action point of the separator 230 has same distances to the intermediate component and the fixing member 130, and a length of the protruding section 231 from the intermediate component to the tail end is greater than the movement stroke of the drawing member 121.

In the foregoing solution, the fixing member 130 fixes the end portion 232 of the separator 230, and the drawing member 121 pushes the portion of the separator 230 located between the fixing member 130 and the winding component 110, and pulls out the protruding section 231 of the separator 230 to the preset length, which can reduce the stroke length of the drawing member 121 when moving between the first position and the second position, and reduce the space occupied by the drawing member 121 during the movement. The fixing member 130 releases the end portion 232 of the separator 230 when the drawing member 121 returns to the first position, and the winding component 110 continues winding to wind the remaining portion of the protruding section 231 of the separator 230 onto the winding component 110, to form the electrode assembly 200.

As shown in FIG. 7, in some embodiments of this application, the fixing member 130 includes a pair of second clamping portions 131, the pair of second clamping portions 131 being configured to clamp the end portion 232 of the separator 230.

The pair of second clamping portions 131 jointly clamp the separator 230 from two sides of the separator 230 in a thickness direction, and the pair of second clamping portions 131 may be a pair of pneumatic fingers or electric fingers.

In the foregoing solution, with the pair of second clamping portions 131 clamping the end portion 232 of the separator 230, the end portion 232 of the separator 230 can be reliably fixed, and the drawing member 121 can reliably pull out the protruding section 231 of the separator 230 to the preset length.

In some embodiments of this application, the drawing member 121 is a movable pulley.

Specifically, the central axis of the drawing member 121 extends along the width direction of the separator 230, and two ends of the drawing member 121 in an axial direction extend beyond two ends of the separator 230 in the width direction, so as to evenly act on the separator 230 along the width of the separator 230.

In the foregoing solution, the drawing member 121 is set as a movable pulley, such that in the process of the drawing member 121 pushing the separator 230 to move, a contact angle of the drawing member 121 relative to the surface of the separator 230 can be automatically adjusted by rotating around the axis of the drawing member 121, avoiding scratching the separator 230.

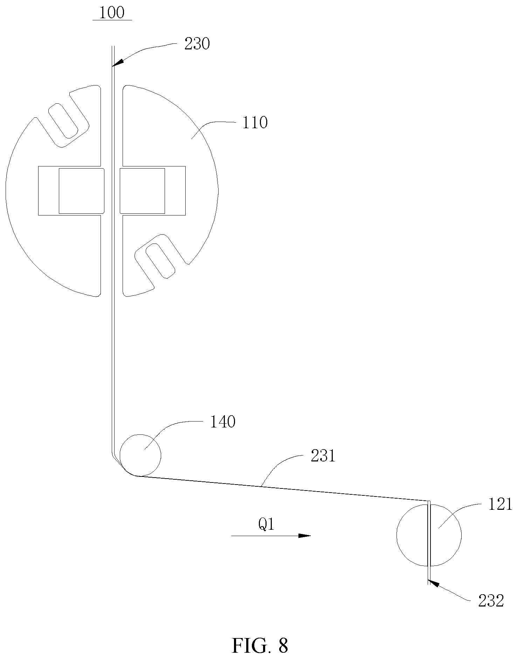

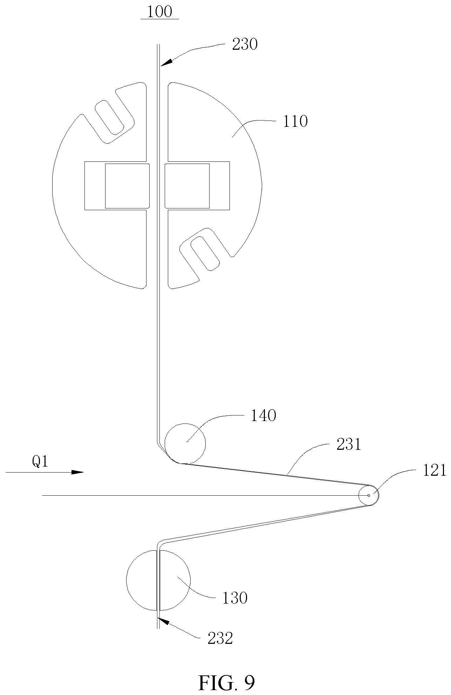

FIG. 8 is a schematic structural diagram of the winding device in FIG. 3 further provided with a fixed pulley (no driving member is shown); and FIG. 9 is a schematic structural diagram of the winding device in FIG. 7 further provided with a fixed pulley.

As shown in FIG. 8 and FIG. 9, in some embodiments of this application, the winding device 100 further includes a fixed pulley 140 disposed between the winding component 110 and the drawing member 121 and configured to guide the separator 230 to move.

An axial direction of the fixed pulley 140 extends along the width direction of the separator 230, and two ends of the fixed pulley 140 in the axial direction extend beyond the separator 230, so as to evenly act on the separator 230 along the width direction of the separator 230.

As shown in FIG. 8, based on the foregoing embodiment in which the drawing member 121 draws the end portion 232 of the separator 230 to move, the protruding section 231 of the separator 230 changes its movement direction after passing around the fixed pulley 140, and during the rotation of the winding component 110, the movement direction of a portion of the separator 230 from the fixed pulley 140 to the drawing member 121 remains unchanged. As shown in FIG. 9, based on the foregoing embodiment in which the fixing member 130 fixes the end portion 232 of the separator 230 and the drawing member 121 pushes the portion of the separator 230 located between the winding component 110 and the fixing member 130, the protruding section 231 of the separator 230 changes its movement direction after passing around the fixed pulley 140, and during the rotation of the winding component 110, the drawing member 121 pushes the separator 230 to pull out the protruding section 231 of the separator 230, and positions of portions of the separator 230 passing around the fixed pulley 140 and fixed to the fixing member 130 remain unchanged.

In the foregoing solution, disposing the fixed pulley 140 between the winding component 110 and the drawing member 121 can guide the change in the movement direction of the separator 230, reduce the influence of the rotation of the winding component 110 on the protruding section 231, and facilitate the control of the movement direction of a portion of the protruding section 231 from the fixed pulley 140 to the end portion 232 of the separator 230, which is not only conducive to calculating the length of the protruding section 231, but also can improve the operational reliability of the winding device 100.

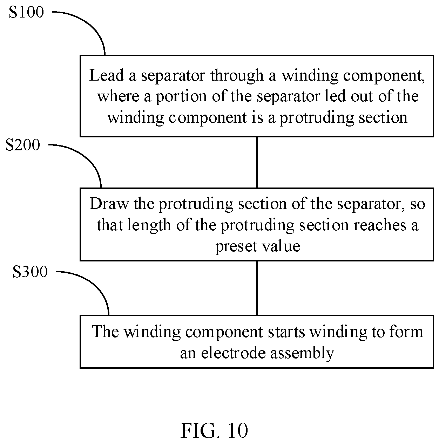

FIG. 10 is a process flowchart of a winding method according to some embodiments of this application.

As shown in FIG. 10, some embodiments of this application further propose a winding method for forming an electrode assembly 200 through winding. The winding method includes:
S 100: Lead a separator 230 through a winding component 110, where a portion of the separator 230 led out of the winding component 110 is a protruding section 231;
S200: Draw the protruding section 231 of the separator 230, so that length of the protruding section 231 reaches a preset value; and
S300: The winding component 110 starts winding to form the electrode assembly 200.

For ease of description, the winding method according to these embodiments of this application is described with reference to the use method of the winding device 100 in the embodiments of this application. It can be understood that the winding method according to these embodiments of this application includes but is not limited to being implemented by using the winding device 100 in the embodiments of this application.

S 100 of leading a separator 230 through a winding component 110, where a portion of the separator 230 led out of the winding component 110 is a protruding section 231 includes the following step.

The separator 230 enters a gap 112 from a first end 1121 of the gap 112 between a pair of winding needles 111 and is led through the gap 112 from a second end 1122, where a portion of the separator 230 from the second end 1122 to an end portion 232 is the protruding section 231.

In some embodiments of this application, S200 of drawing the protruding section 231 of the separator 230, so that length of the protruding section 231 reaches a preset value includes the following step.

S210: The drawing member 121 moves from a first position to a second position to draw the protruding section 231, so that the length of the protruding section 231 reaches the preset value.

In some embodiments of this application, S210 in which the drawing member 121 moves from a first position to a second position to draw the protruding section 231, so that the length of the protruding section 231 reaches the preset value includes the following step.

S211: The drawing member 121 includes a pair of first clamping portions 1211, the pair of first clamping portions 1211 is used to clamp the end portion 232 of the separator 230, and the drawing member 121 moves from the first position to the second position, so that the length of the protruding section 231 reaches the preset value.

In some other embodiments of this application, S210 in which the drawing member 121 moves from a first position to a second position to draw the protruding section 231, so that the length of the protruding section 231 reaches the preset value includes the following step.

S212: The drawing member 121 is a movable pulley, a fixing member 130 is used to fix the end portion 232 of the separator 230, and the drawing member 121 pushes a portion of the separator 230 located between the winding component 110 and the fixing member 130 and moves from the first position to the second position, so that the length of the protruding section 231 reaches the preset value.

In some embodiments of this application, S200 of drawing the protruding section 231 of the separator 230, so that length of the protruding section 231 reaches a preset value includes the following step.

S220: A fixed pulley 140 is disposed between the winding component 110 and the drawing member 121, and after led through the second end 1122 of the gap 112 of the winding component 110, the separator 230 first passes around the fixed pulley 140 and then is drawn by the drawing member 121.

In some embodiments of this application, S300 of the winding component 110 starting winding to form the electrode assembly 200 includes the following steps.

S310: The drawing member 121 returns from the second position to the first position, and provides a tension force to the separator 230 in the process of returning to the first position; and
S320: When the drawing member 121 returns to the first position, the drawing member 121 releases the separator 230.

Based on the embodiment of S212 in which the drawing member 121 is a movable pulley, a fixing member 130 is used to fix the end portion 232 of the separator 230, and the drawing member 121 pushes a portion of the separator 230 located between the winding component 110 and the fixing member 130 and moves from the first position to the second position, so that the length of the protruding section 231 reaches the preset value, S300 of the winding component 110 starting winding to form the electrode assembly 200 further includes the following step.

S330: When the drawing member 121 returns to the first position, the fixing member 130 releases the end portion 232 of the separator 230.

In the electrode assembly 200 formed through winding by using the winding method according to these embodiments of this application, the protruding section 231 of the separator 230 with a length of the preset value can also be wound onto the winding component 110, allowing the protruding section 231 of the separator 230 to be stacked with the new separator 230 entering the winding component 110, so that the separator 230 between the negative electrode plate 210 and the positive electrode plate 220 at the inner ring has a plurality of layers. In this way, when lithium precipitation occurs, lithium dendrites are less likely to pierce the separator to cause contact between the negative electrode plate 210 and the positive electrode plate 220 and in turn cause short circuits inside the electrode assembly 200. The electrode assembly 200 formed through winding by using such winding method has high safety performance.

In some embodiments of this application, the preset value of the length of the protruding section 231 is greater than a perimeter of the winding component 110.

As shown in FIG. 1, based on the foregoing embodiment in which the first end 1121 and second end 1122 of the gap 112 are located on two opposite sides of the winding component 110 in the radial direction respectively, the winding component 110 starts rotating after the length of the protruding section 231 reaches the preset value. The protruding section 231 first directly comes into contact with the winding component from a starting end 2311 for half of the perimeter until the protruding section 231 is stacked with a first separator 233 in the separator 230. After the negative electrode plate 210 is inserted between the first separator 233 and a second separator 234 to enter the winding component 110, the protruding section 231, stacked on the original first separator 233 on the outer side of the negative electrode plate 210, is added, that is, the negative electrode plate 210 has three layers of separators. After the positive electrode plate 220 enters the winding component 110 from the inner side of the second separator 234, the positive electrode plate 220 is disposed opposite the outer side of the previously wound negative electrode plate 210, that is, there are three layers of separators between the innermost ring of the positive electrode plate 220 and the negative electrode plate 210 on the inner side of the positive electrode plate 220. The protruding section 231 continues to be stacked for half of the perimeter of the winding component 110 to cover the first bent region 235 at the innermost ring of the positive electrode plate 220, thereby protecting the first bent region 235 at the innermost ring of the positive electrode plate 220 against short circuits in the electrode assembly 200 when lithium precipitation occurs.

In the foregoing solution, the preset value of the protruding section 231 is greater than the perimeter of the winding component 110, such that a plurality of layers of separators can be disposed at least between the first bent region 235 (referring to FIG. 2) at the innermost ring of the positive electrode plate 220 and the negative electrode plate 210 on the inner side of the positive electrode plate 220, thereby preventing lithium dendrites from piercing the separator when lithium precipitation occurs on the inner side of the first bent region 235 (referring to FIG. 2) at the innermost ring of the positive electrode plate 220, significantly improving the safety performance of the electrode assembly 200.

In other embodiments, when it is necessary to protect the first and second bent regions 235 at the innermost ring of the positive electrode plate 220 from being affected by lithium precipitation, the preset value can be greater than 1.5 times the perimeter of the winding component 110. Similarly, along an extension direction of the positive electrode plate 220 being wound from the innermost ring to the outside, for each additional bent region 235 protected, the length of the preset value increases by one perimeter of the winding component. No further examples are given herein.

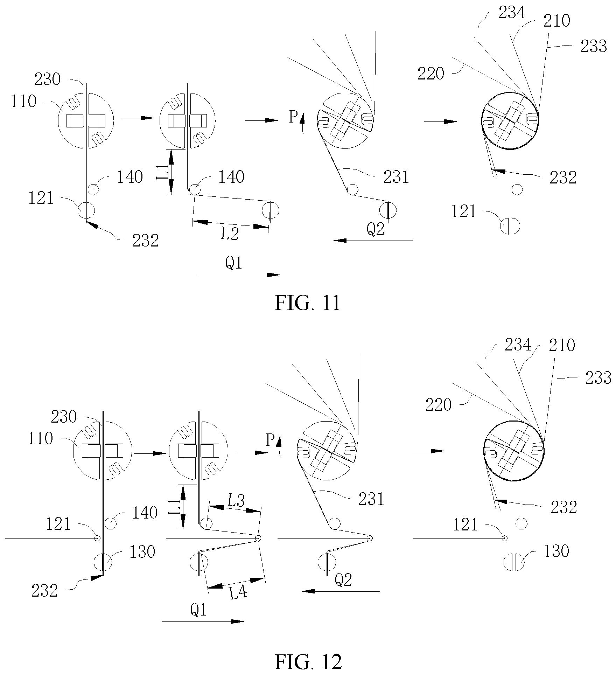

FIG. 11 is a schematic diagram of a winding process of the winding device in FIG. 3; and FIG. 12 is a schematic diagram of a winding process of the winding device in FIG. 7.

As shown in FIG. 1 to FIG. 6 and FIG. 11, some embodiments of this application propose a winding device 100 configured to form an electrode assembly 200 through winding. The winding device 100 includes a winding component 110, a drawing mechanism 120, and a fixed pulley 140. The drawing mechanism 120 includes a drawing member 121, the fixed pulley 140 is fixedly disposed below the winding component 110, and the drawing member 121 can move between a first position and a second position. The drawing member 121 includes a pair of first clamping portions 1211. A separator 230 passes around the fixed pulley 140 after led out of the winding component 110, and the drawing member 121 moves under the fixed pulley 140 to pull out a protruding section 231 of the separator 230.

The winding method of the winding device 100 is as follows.

The separator 230 is led out of the winding component 110, and an end portion 232 is exposed from the winding component 110.

Before the winding component 110 starts winding, the pair of first clamping portions 1211 of the drawing member 121 clamp the end portion 232 of the separator 230.

The drawing member 121 drives the end portion 232 of the separator 230 to move from the first position to the second position along a first sub-direction Q 1, to pull out the separator 230 until length of the protruding section 231 is a preset value, where the preset value is L1 + L2, and the length of the preset value is greater than a perimeter of the winding component 110.

The winding component 110 starts winding along a first direction P, and at the same time, the drawing member 121 clamps the end portion 232 of the separator 230 to retract along a second sub-direction Q2, so as to tension the protruding section 231 of the separator.

After the drawing member 121 returns to the first position, the drawing member 121 releases the end portion 232 of the separator 230, and the winding component 110 continues winding to wind the entire protruding section 231 onto the winding component 110, to form the electrode assembly 200 with a special structure.

As shown in FIG. 7 to FIG. 9 and FIG. 12, some embodiments of this application propose a winding device 100 configured to form an electrode assembly 200 through winding. The winding device 100 includes a winding component 110, a drawing mechanism 120, a fixing member 130, and a fixed pulley 140. The drawing mechanism 120 includes a drawing member 121, the fixed pulley 140 is fixedly disposed below the winding component 110, and the drawing member 121 can move between a first position and a second position. The drawing member 121 is a movable pulley. A separator 230 passes around the fixed pulley 140 after led out of the winding component 110, and the fixing member 130 is fixedly disposed below the fixed pulley 140. The fixing member 130 includes a pair of second clamping portions 131, and the pair of second clamping portions 131 are configured to clamp an end portion 232 of the separator 230. The drawing member 121 is disposed between the fixing member 130 and the fixed pulley 140, and the drawing member 121 can push the separator 230 to pull out a protruding section 231 of the separator 230.

The use method of the winding device 100 is as follows.

The separator 230 is led out of the winding component 110, and the end portion 232 is exposed from the winding component 110.

Before the winding component 110 starts winding, the fixing member 130 fixedly clamps the end portion 232 of the separator 230.

The drawing member 121 pushes a portion of the separator 230 located between the fixed pulley 140 and the fixing member 130 to move from the first position to the second position along a first sub-direction Q1, to pull out the separator 230 from the winding component 110 until length of the protruding section 231 is a preset value, where the preset value is L1 + L3 + L4, and the length of the preset value is greater than a perimeter of the winding component 110.

The winding component 110 starts winding along a first direction P, and at the same time, the drawing member 121 pushes the separator 230 to retract along a second sub-direction Q2, so as to tension the protruding section 231 of the separator 230.

After the drawing member 121 returns to the first position, the drawing member 121 releases the separator 230, the fixing member 130 releases the end portion 232 of the separator 230, and the winding component 110 continues winding to wind the entire protruding section 231 onto the winding component 110, to form the electrode assembly 200 with a special structure.

The winding device 100 in the embodiments of this application includes the winding component 110 and the drawing mechanism 120, and can stretch the length of the protruding section 231 of the separator 230 to the preset value. The winding component 110 can wind the protruding section 231 during winding, to form the electrode assembly 200 with a special structure. In the electrode assembly 200, there are a plurality of layers of separators between the innermost ring of the positive electrode plate 220 and the negative electrode plate 210 on the inner side of the positive electrode plate 220, which can avoid short circuits inside the electrode assembly 200 caused by lithium dendrites short-circuiting the positive electrode plate 220 and the negative electrode plate 210 when lithium precipitation occurs there, ensuring high safety performance. Using the winding device 100 and the winding method to form the electrode assembly 200 through winding not only can implement the industrial production of the electrode assembly 200 but also can improve the manufacturing efficiency of the electrode assembly 200.

Although this application has been described with reference to the preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A winding device, configured to form an electrode assembly through winding, wherein the winding device comprises:
a winding component; and
a drawing mechanism, wherein the drawing mechanism is configured to draw a protruding section of a separator after the separator is led out of the winding component, so that length of the protruding section reaches a preset value;
wherein the winding component is configured to start winding after the length of the protruding section reaches the preset value, to form the electrode assembly.

2. The winding device according to claim 1, wherein the drawing mechanism comprises a drawing member and a driving member, the driving member is configured to drive the drawing member to move between a first position and a second position, and the drawing member is configured to draw the protruding section in a process of moving from the first position to the second position.

3. The winding device according to claim 2, wherein the drawing member is configured to return from the second position to the first position after the winding component starts winding, and to provide a tension force to the separator in the process of returning to the first position.

4. The winding device according to claim 2 or 3, wherein the drawing member is configured to return from the second position to the first position after the winding component starts winding, and to release the separator when returning to the first position.

5. The winding device according to any one of claims 2 to 4, wherein when the drawing member is at the first position, the drawing member is located below the winding component in the direction of gravity.

6. The winding device according to claim 5, wherein a movement direction of the drawing member intersects with the direction of gravity.

7. The winding device according to any one of claims 2 to 6, wherein the drawing member comprises a pair of first clamping portions, the pair of first clamping portions being configured to clamp an end portion of the separator.

8. The winding device according to any one of claims 2 to 7, wherein the winding device further comprises:
a fixing member configured to fix an end portion of the separator, the fixing member being configured to release the end portion of the separator when the drawing member returns to the first position;
wherein the drawing member is configured to push a portion of the separator located between the fixing member and the winding component.

9. The winding device according to claim 8, wherein the fixing member comprises a pair of second clamping portions, the pair of second clamping portions being configured to clamp the end portion of the separator.

10. The winding device according to any one of claims 2 to 9, wherein the drawing member is a movable pulley.

11. The winding device according to any one of claims 2 to 10, wherein the winding device further comprises:
a fixed pulley disposed between the winding component and the drawing member and configured to guide the separator to move.

12. A winding method for forming an electrode assembly through winding, wherein the winding method comprises:
leading a separator through a winding component, wherein a portion of the separator led out of the winding component is a protruding section;
drawing the protruding section of the separator, so that length of the protruding section reaches a preset value; and
starting, by the winding component, winding to form the electrode assembly.

13. The winding method according to claim 12, wherein the preset value is greater than a perimeter of the winding component.
